# EUROPÄISCHE PATENTSCHRIFT

(11) **EP 1 612 032 B1**
(45) Veröffentlichungstag und Bekanntmachung des Hinweises auf die Patenterteilung: **20.09.2006**
(21) Anmeldenummer: 04103123.8
(22) Anmeldetag: 02.07.2004
(51) Int. Cl.: B29D 11/00, B29C 33/30

(54) **Vorrichtung zum Ausrichten von zwei Formschalen**
Apparatus for aligning of two mould halves
Dispositif pour aligner deux coquilles de moulage

(43) Veröffentlichungstag der Anmeldung: 04.01.2006
(73) Patentinhaber: Interglass Technology AG, 6330 Cham (CH)
(72) Erfinder: PROBST, Urs, 6300, Zug (CH)
(74) Vertreter: Falk, Urs

(56) Entgegenhaltungen:
- FR-A- 2 794 055
- GB-A- 2 227 969
- US-A- 5 178 801

## Beschreibung

Die Erfindung betrifft eine Vorrichtung zum Ausrichten von zwei Formschalen der im Oberbegriff des Anspruchs 1 genannten Art.

Solche Formschalen werden verwendet für die Herstellung von optischen Linsen. Dabei wird ein Monomer in eine durch zwei Formschalen und eine Dichtung begrenzte Kavität gegossen und anschliessend polymerisiert, wobei die Linse entsteht. Aus dem Patent US 5'178'801 ist es bekannt, eine vordere Formschale und eine hintere Formschale in je einer Zentriervorrichtung zu zentrieren, anschliessend auf einer gemeinsamen Achse in einem vorbestimmten Abstand anzuordnen und durch ein Tape miteinander zu einem Verbund zu verbinden. In den Zentriervorrichtungen werden die optischen Achsen der Formschale ausgerichtet. Die Zentriervorrichtungen bestehen aus zwei Zentrierplatten mit je zwei V-förmigen Schenkeln, deren Innenkanten schräg zueinander verlaufen. Beim Zentrieren der Formschale werden die beiden Zentrierplatten zusammengeschoben und dabei die Formschale an den Innenkanten der Schenkel ausgerichtet. Der Nachteil bei dieser Vorrichtung ist, dass die Zentriervorrichtung überbestimmt ist, weil die Lage einer Formschale durch vier Berührungspunkte bestimmt wird, obwohl drei Berührungspunkte ausreichen würden. Ein weiterer Nachteil ist, dass die Formschalen nach der Zentrierung transportiert und auf einer gemeinsamen Achse ausgerichtet werden müssen, bevor sie mit dem Tape verbunden werden können. Vorrichtungen gemäss dem Oberbegriff des Anspruchs 1 sind auch aus FR 2794055 und GB 2227969 bekannt.

Der Erfindung liegt die Aufgabe zugrunde, eine Vorrichtung für die gegenseitige Ausrichtung und Positionierung von zwei Formschalen zu entwickeln, die eine grosse Zentriergenauigkeit ermöglicht.

Die genannte Aufgabe wird erfindungsgemäss gelöst durch die Merkmale des Anspruchs 1.

Die erfindungsgemässe Vorrichtung umfasst einen ersten Greifer zum Halten der ersten Formschale und einen zweiten Greifer zum Halten der zweiten Formschale und eine Zentrierstation. Die beiden Greifer sind relativ zueinander und relativ zur Zentrierstation entlang einer vorbestimmten Achse verschiebbar und einzeln wie auch synchron um die Achse drehbar. Die Zentrierstation besteht aus einem Stützkörper, der mindestens ein entlang eines Kreises angeordnetes Federelement abstützt, wobei die Achse durch das Zentrum des Kreises verläuft. Für die Zentrierung wird die Formschale vom Greifer in die Zentrierstation hineinbewegt, wobei das Federelement bzw. die Federelemente je nach ihrer konkreten Beschaffenheit ausgelenkt bzw. deformiert werden, und dann vom Greifer gelöst, so dass die Formschale einzig vom Federelement bzw. von den Federelementen gehalten ist. Die vom Federelement bzw. von den Federelementen von allen Seiten gleichmässig auf die Formschale einwirkenden radialen Kräfte bewirken, dass die Formschale in den Kraftschwerpunkt verschoben wird, so dass sie bezüglich der Achse zentriert ist. Anschliessend wird die Formschale vom Greifer wieder ergriffen und aus der Zentrierstation herausgefahren. Die erfindungsgemässe Vorrichtung hat den Vorteil, dass die beiden Greifer die Zentrierachse der Zentrierstation als gemeinsame Achse besitzen.

Der Stützkörper ist gemäss einem ersten Ausführungsbeispiel ein Körper mit einer Wand, die eine kreisförmige Öffnung bildet, durch deren Zentrum die Achse verläuft. Die Wand enthält eine Nut. Ein O-Ring, eine Schnur, ein Schlauch oder dergleichen aus elastisch deformierbarem Material ist in die Nut eingelegt. Die Nut ist bei diesem Beispiel kreisförmig und stützt O-Ring, Schnur oder Schlauch gleichmässig entlang des Kreises ab. Unter einem O-Ring ist sowohl ein herkömmlicher, geschlossener O-Ring, als auch ein aufgeschnittener O-Ring, den man als Rundschnur bezeichnen kann, zu verstehen. Den O-Ring, die Schnur oder den Schlauch kann man als einziges Federelement oder auch als eine Vielzahl von Federelementen ansehen, die kontinuierlich ineinander übergehen. Der O-Ring bzw. die Rundschnur berührt die Formschale entlang ihres Umfanges und die von allen Seiten gleichmässig auf die Formschale einwirkenden radialen Kräfte bewirken, dass sich das Zentrum der Formschale in den Kraftschwerpunkt verschiebt.

Wenn ein Schlauch verwendet wird, kann der Durchmesser und/oder die Festigkeit des Schlauches bei Bedarf durch Beaufschlagen des Schlauches mit Druckluft vergrössert werden. Zum Ein- und Ausfahren der Formschale wird die Druckluft aus dem Schlauch abgelassen, um die Reibung zwischen der Formschale und dem Schlauch zu vermindern. Für die Zentrierung wird der Schlauch mit Druckluft beaufschlagt.

Die Nut kann mehrere Vertiefungen aufweisen. Die Zentrierung der Formschale erfolgt dann nicht mehr gleichmässig von allen Seiten, sondern nur noch von denjenigen Bereichen, wo die Nut nicht vertieft ist. Bei dieser Ausführung bildet nur ein Teil von O-Ring, Schnur oder Schlauch die Federelemente, nämlich der Teil, der nicht in die Vertiefungen ausweichen kann.

Bei einem anderen Ausführungsbeispiel ist der Stützkörper ein Ring und eine Vielzahl von Federelementen ist gebildet durch federnde Laschen, die nebeneinander entlang der Öffnung des Rings angeordnet sind. Der Ring und die Laschen sind vorzugsweise aus einem Stück Material gefertigt, das ähnliche mechanische Eigenschaften wie Federstahl aufweist. Beim Einfahren der Formschale werden die Laschen aus ihrer Ruhelage ausgelenkt und üben somit eine Kraft gegen den Rand der Formschale aus. Sobald die Formschale vom Greifer gelöst ist, fmdet ein Ausgleich der von den einzelnen Laschen erzeugten Kräfte statt: Die Formschale wird in den Schwerpunkt der Kräfte verschoben.

Der Kern der Erfindung besteht einerseits in der vorgestellten Art der Zentrierstation und andererseits darin, dass die beiden Greifer relativ zueinander und relativ zur Zentrierstation entlang einer vorbestimmten Achse verschiebbar und um diese Achse drehbar sind. Die Linearbewegungen der beiden Greifer und ihre Drehbewegungen können konstruktiv auf vielfältige Art realisiert werden.

Bei einer besonders vorteilhaften Lösung umfasst die Vorrichtung einen ersten Motor für die Verschiebung des ersten Greifers entlang einer vorbestimmten Achse, einen zweiten Motor für die Verschiebung des zweiten Greifers entlang der Achse, einen dritten Motor für die Drehung des ersten Greifers um die Achse und einen vierten Motor für die Drehung des zweiten Greifers um die Achse und die Zentrierstation ist ortsfest angeordnet. Die Achse durchstösst das Zentrum des Kreises der Zentrierstation. Die Achse ist also die Zentrierachse der Zentrierstation. Der erste Greifer und der zweite Greifer sind bevorzugt auf einer gemeinsamen Führungsschiene verschiebbar gelagert, die parallel zur Achse verläuft.

Andererseits ist es auch möglich, einen der Greifer ortsfest zu platzieren und nur den anderen Greifer und auch die Zentrierstation entlang der Achse verschiebbar anzuordnen. Da es nur auf eine Relativbewegung zwischen den beiden Greifern wie auch der Zentrierstation ankommt, ist es unerheblich, welche dieser Geräte verschiebbar sind. Bevorzugt ist die Zentrierstation ortsfest angeordnet und die beiden Greifer sind verschiebbar. Es ist aber z.B. auch eine Konstruktion möglich, bei der ein Greifer ortsfest und der zweite Greifer und die Zentrierstation verschiebbar sind.

Die beiden Formschalen werden mittels der Zentrierstation zentriert und ihre gegenseitige Drehlage und ihr Abstand wird entsprechend dem Linsenrezept durch Verschieben und Drehen der beiden Greifer eingestellt. Die beiden Formschalen sind dann ausgerichtet und werden mittels eines Dichtungselementes zu einem Verbund verbunden.

Als Dichtungselement dient vorzugsweise ein im Fachjargon Tape genanntes Klebband. Das Tape ist ein die beiden Formschalen verbindendes Element, das einerseits eine geringe Steifigkeit aufweist, so dass es sich problemlos auf die beiden Formschalen auflcleben lässt, und dessen Steifigkeit andererseits ausreicht, dass der gebildete Verbund hinreichend stabil ist. Das Tape gewährleistet, dass sich die Ausrichtung der Formschalen relativ zueinander nicht oder nur unwesentlich ändert, wenn der Verbund zur Abfüllstation transportiert wird, wo die Linse durch Abgiessen eines Monomers hergestellt wird.

Alternativ ist es möglich, ein beliebiges anderes Dichtungselement zu verwenden, um zwischen den beiden Formschalen einen Hohlraum zu bilden, der mit dem Monomer gefüllt werden kann. Das Dichtungselement könnte beispielsweise ein Ring aus Gummi sein, der um die beiden Formschalen gelegt wird. In diesem Fall wird das Monomer bevorzugt an Ort und Stelle eingefüllt.

Die Erfindung wird nachfolgend anhand von Ausführungsbeispielen und anhand der Zeichnung näher erläutert.

Es zeigen:
- Fig. 1: eine Vorrichtung zum Ausrichten von zwei Formschalen und zur Bildung eines aus den Formschalen und einem Tape gebildeten Verbunds, inklusive einer Vorrichtung zum Auftragen des Tapes,
- Fig. 2: die Vorrichtung gemäss Fig. 1, ohne die Vorrichtung zum Auftragen des Tapes,
- Fig. 3: eine Zentrierstation für die Justierung der optischen Achsen der Formschalen,
- Fig. 4: eine Zentrierstation mit einem O-Ring im Schnitt,
- Fig. 5: eine Zentrierstation mit einem Schlauch im Schnitt,
- Fig. 6: ein Detail der Zentrierstation,
- Fig. 7: einen Träger mit mehreren Federelementen,
- Fig. 8: einen Ring mit Federelementen, und
- Fig. 9: einen Greifer.

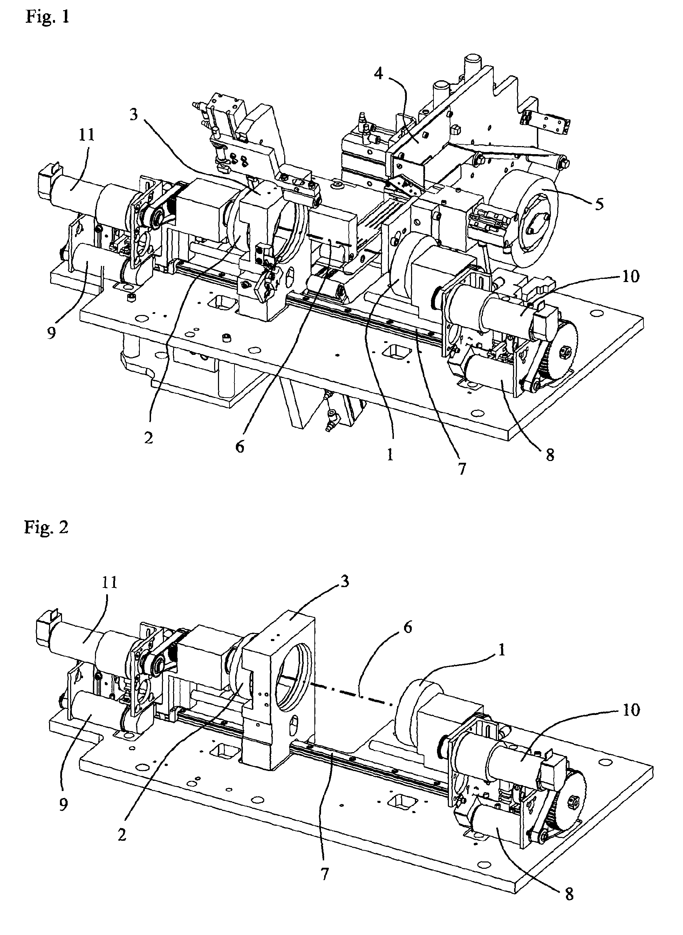

Die Fig. 1 und 2 zeigen in perspektivischer Ansicht eine Vorrichtung, die dazu dient, die optischen Achsen einer ersten Formschale und einer zweiten Formschale relativ zueinander auszurichten und in einem vorbestimmten Abstand zu positionieren und dann durch Aufkleben eines Tapes entlang des Randes der beiden Formschalen zu einem Verbund zu verbinden. Die Fig. 1 zeigt die gesamte Vorrichtung mit der Vorrichtung zum Auftragen des Tapes. Die Fig. 2 zeigt die gleiche Vorrichtung aus Gründen der zeichnerischen Klarheit ohne die Vorrichtung zum Auftragen des Tapes. Die Vorrichtung umfasst einen Greifer 1 zum Halten der ersten Formschale, einen Greifer 2 zum Halten der zweiten Formschale, eine Zentrierstation 3 und eine Vorrichtung 4 zum Zuführen und Auftragen des Tapes 5. Die beiden Greifer 1 und 2 sind entlang einer vorbestimmten Achse 6 verschiebbar und sowohl einzeln als auch gemeinsam um die Achse 6 drehbar. Die beiden Greifer 1 und 2 sind mit Vorteil auf einer gemeinsamen Führungsschiene 7 gelagert. Die Achse 6 verläuft parallel zur Führungsschiene 7. Ein erster Motor 8 dient zur Verschiebung des ersten Greifers 1 entlang der Führungsschiene 7, ein zweiter Motor 9 dient zur Verschiebung des zweiten Greifers 2 entlang der Führungsschiene 7, ein dritter Motor 10 dient zur Drehung des ersten Greifers 1 um die Achse 6, ein vierter Motor 11 dient zur Drehung des zweiten Greifers 2 um die Achse 6. Die bei diesem Beispiel ortsfest angeordnete Zentrierstation 3 dient dazu, die Symmetrieachse oder die optische Achse einer Formschale so auszurichten, dass sie mit der Achse 6 zusammenfällt. Die beiden Formschalen enthalten an ihrem Rand je eine Markierung (sogenannte Tabo Marke), die die Drehlage der Formschale charakterisiert. Die Motoren 8 bis 11 und die Vorrichtung 4 zum Auftragen des Tapes 5 werden von einer Steuereinrichtung gesteuert.

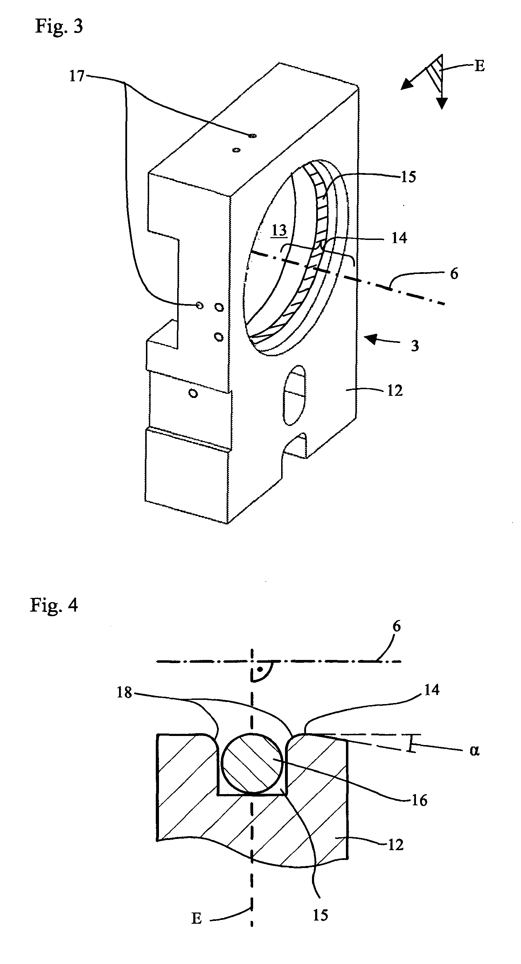

Die Fig. 3 zeigt die Zentrierstation 3 in perspektivischer Ansicht im Detail. Die Zentrierstation 3 besteht aus einem Körper 12 mit einer kreisförmigen Öffnung 13, die durch eine Wand 14 gebildet ist. Die Wand 14 enthält eine Nut 15, in die ein O-Ring 16 (Fig. 4) eingelegt ist. Die Nut 15 stützt den O-Ring 16. Der O-Ring 16 besteht aus elastisch deformierbarem Material, zum Beispiel aus Gummi oder einem anderen Elastomer. Die Nut 15 liegt in einer orthogonal zur Achse 6 ausgerichteten Ebene E und der Körper 12 ist bezüglich der Achse 6 so positioniert und justiert, dass das Zentrum der kreisförmigen Öffnung 13 auf der Achse 6 liegt. Um eine Formschale zu zentrieren, wird die Formschale vom entsprechenden Greifer 1 oder 2 in die Zentrierstation 3 hineingeschoben, bis sie vom O-Ring 16 mit festem Sitz gehalten wird. Dann wird der Greifer von der Formschale vorübergehend gelöst, so dass die Formschale nur vom O-Ring 16 gehalten ist. Die vom O-Ring 16 von allen Seiten gleichmässig auf die Formschale einwirkenden radialen Kräfte bewirken, dass die Formschale in den Kraftschwerpunkt geschoben wird, d.h. die Formschale wird zentriert und ihre optische Achse fällt im Idealfall mit der Achse 6 zusammen. Anschliessend wird die Formschale vom Greifer wieder ergriffen.

Die Durchmesser der Nut 15 bzw. des O-Rings 16 sind so bemessen, dass beim Einführen einer Formschale in die Zentrierstation 3 der O-Ring 16 komprimiert wird. Der Innendurchmesser des O-Rings 16 ist deshalb auf jeden Fall kleiner als der kleinste zu erwartende Durchmesser der Formschalen. Der Betrag der Differenz zwischen dem Durchmesser der Formschale und dem Innendurchmesser des O-Rings 16 beeinflusst die Stärke der radial und der axial wirkenden Kräfte. Je grösser diese Differenz ist, desto grösser sind die in axialer Richtung gerichteten Kräfte und damit auch die beim Einführen der Formschale wirkende Reibung zwischen dem O-Ring 16 und der Formschale.

Um den Einfluss unvermeidlicher Toleranzen des Innendurchmessers des O-Rings 16 zu eliminieren, ist es vorteilhaft, den O-Ring 16 aufzuschneiden, d.h. den O-Ring 16 in eine Rundschnur zu verwandeln. Die Länge der Rundschnur ist etwas kleiner als der Umfang der Nut 15, so dass die Rundschnur problemlos in die Nut 15 eingelegt werden kann. Die entstandene Unstetigkeitsstelle ist klein im Verhältnis zum Umfang und beeinflusst die Zentrierung der Formschalen nicht oder unwesentlich. Der massgebende Innendurchmesser der in die Nut 15 eingelegten Rundschnur ist bestimmt durch den Umfang der Nut 15 und den Durchmesser der Rundschnur. Unter dem Begriff O-Ring 16 ist sowohl ein geschlossener O-Ring 16 als auch ein in die Rundschnur aufgeschnittener O-Ring 16 zu verstehen.

Der Körper 12 ist mit Vorteil mit mindestens einer Bohrung 17 versehen, die in die Nut 15 mündet. Die Bohrung 17 dient dazu, den O-Ring 16 zum Auswechseln auf einfache Weise aus dem Körper 12 herausnehmen zu können.

Die Fig. 4 zeigt die Wand 14 mit der Nut 15 im Querschnitt, in die der O-Ring 16 eingelegt ist. Die Nut 15 weist abgerundete Kanten 18 auf, um zu vermeiden, dass der O-Ring 16 beim Ein- und Ausfahren der Formschale an den Kanten 18 beschädigt wird. Die Wand 14 ist auf der der Vorrichtung 4 (Fig. 1) zum Auftragen des Tapes 5 zugewandten Seite bevorzugt abgeschrägt, d.h. ein äusserer Bereich verläuft unter einem Winkel α schräg zur Achse 6, damit an der Wand 14 beim Einfahren der Formschale bereits eine Vorzentrierung stattfmdet, sofern die Formschale ein gewisses Mass an exzentrischer Ausrichtung am Greifer überschreitet.

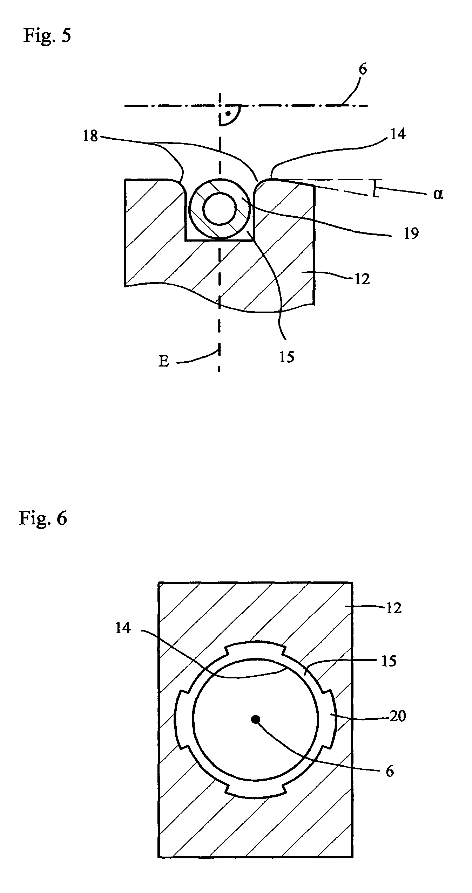

Die Fig. 5 zeigt die Wand 14 mit der Nut 15 im Querschnitt, in die anstelle des O-Rings ein Schlauch 19 eingelegt ist. Der Schlauch 19 ist, fakultativ, mit Druckluft beaufschlagbar.

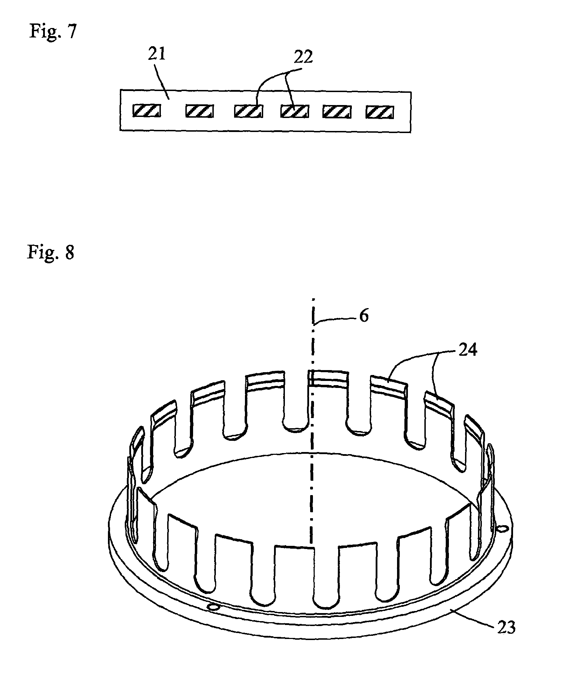

Die Fig. 6 zeigt den Körper 12 in einem senkrecht zur Achse 6 (Fig. 1) durch die Nut 15, d.h. durch die Ebene E, verlaufenden Schnitt. Die Nut 15 weist mehrere Vertiefungen 20 auf. Die Vertiefungen 20 dienen dazu, dass der O-Ring 16 bzw. der Schlauch 19 beim Einfahren der Formschale lokal ausweichen kann. Dies vermindert die Reibungskräfte. Die Zentrierung der Formschale erfolgt dann nur noch mittels derjenigen Bereiche der Nut 15, wo keine Vertiefungen 20 vorhanden sind. Eine andere Lösung besteht darin, einen O-Ring in Stücke zu zerschneiden und einige der Stücke im Abstand zueinander auf einem Träger aufzukleben und dann den Träger in die Nut 15 des Körpers 12 einzusetzen. Die Fig. 7 zeigt in Aufsicht einen solchen Träger 21 mit darauf aufgeklebten Stückchen 22 aus elastisch deformierbarem Material, die separate Federelemente bilden.

Die Fig. 8 zeigt einen Ring 23 mit einer Vielzahl von als Laschen 24 ausgebildeten Federelementen. Der Ring 23 besteht aus einem Material mit ähnlichen mechanischen Eigenschaften wie Federstahl. Der Ring 23 wird in die Öffnung 13 des Körpers 12 (Fig. 3) eingesetzt. Beim Einfahren der Formschale werden die Laschen 24 senkrecht zu ihrer Längsrichtung bzw. senkrecht zur Zentrierachse 6 ausgelenkt. Der Ring 23 und die Öffnung 13 im Körper 12 sind in ihren Abmessungen so aufeinander abgestimmt, dass die Laschen 24 die Wand 14 nicht berühren oder erst dann, wenn die Auslenkung der Laschen 24 ein gewisses Mass erreicht.

Ein Vorteil der Lösung mit dem Ring 23 gegenüber der Lösung mit dem O-Ring 16 besteht in geringeren Reibungskräften beim Einfahren der Formschale in die Zentrierstation 3 (Fig. 1) und in geringerer Abnutzung des Rings.

Die beiden Ausführungsformen für die Federelemente können kombiniert werden.

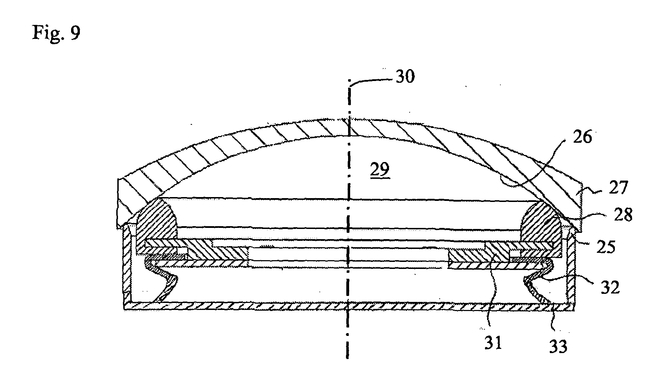

Die beiden Greifer 1 und 2 sind gleich aufgebaut. Der Aufbau der Greifer wird anhand der Fig. 9 näher beschrieben. Der Greifer enthält eine Auflage 25, auf der die Passivseite 26 der Formschale 27 zur Auflage kommt, sowie ein innerhalb der Auflage 25 angeordnetes kreisförmiges, deformierbares Dichtungselement 28, um einen zwischen der Formschale 27 und dem Greifer entstandenen, mit Vakuum beaufschlagbaren Hohlraum 29 abzudichten. Die Auflage 25 befindet sich in einer senkrecht zu einer Symmetrieachse 30 verlaufenden Ebene. Die der Formschale 27 zugewandte Oberfläche der Auflage 25 ist torusförmig. Das Dichtungselement 28 ist auf einer Platte 31 befestigt, die mittels eines wegaufnehmenden Elementes, vorzugsweise eines Faltenbalges 32, mit einer die Auflage 25 tragenden Plattform 33 verbunden ist. Der Faltenbalg 32 ermöglicht eine relativ grosse Auslenkung des Dichtungselementes entlang der Symmetrieachse 30 des Greifers, wie auch eine Verschiebung innerhalb des durch den Torus der Auflage 25 begrenzten Innenraumes, um Formschalen unterschiedlichster Geometrie greifen zu können. Die Symmetrieachse 30 entspricht der Rotationsachse des Greifers und somit der Achse 6 (Fig. 1). Wenn der Greifer keine Formschale ergriffen hat, dann nimmt der Faltenbalg 32 seine Ruhestellung ein und das Dichtungselement 28 ragt typischerweise um einige Millimeter über den Rand der Auflage 25 hinaus.

Die Arbeitsweise der Arbeitsstation (Fig. 1) wird nun am Beispiel einer Zentrierstation 3, die als Federelement einen O-Ring 16 enthält, erläutert:
- Ein nicht dargestellter Roboter oder ein Operateur übergibt die erste Formschale an den ersten Greifer 1. Dabei wird der Faltenbalg 32 zusammengedrückt, bis die erste Formschale auf der Auflage 25 des ersten Greifers 1 zur Auflage kommt. Der zwischen dem ersten Greifer 1 und der Formschale gebildete Hohlraum wird mit Vakuum beaufschlagt.
- Der erste Motor 8 verschiebt den ersten Greifer 1 entlang der Achse 6, bis sich die erste Formschale in der Zentrierstation 3 befindet. Wenn die erste Formschale bereits einigermassen richtig zentriert ist, dann berührt sie beim Einfahren in die Zentrierstation 3 nur den O-Ring 16. Wenn die erste Formschale hingegen ungenau zentriert ist, dann kommt sie beim Einfahren in die Zentrierstation 3 in Berührung mit der abgeschrägten Wand 14 und wird dabei vorzentriert, d.h. die erste Formschale wird auf der Auflage 25 verschoben, so dass sich der Grad der Zentrierung bezüglich der Achse 6 erhöht. Dabei kann das Dichtungselement 28 weiter deformiert werden.
- Das Vakuum im Hohlraum 29 zwischen der ersten Formschale und dem ersten Greifer 1 wird gelöst und der erste Greifer 1 wird zurückgefahren, bis der Greifer 1 von der ersten Formschale getrennt ist. Auf der Seite des ersten Greifers 1 verschwindet jegliche Deformation des Dichtungselementes 28 und des Faltenbalges 32: Das Dichtungselement 28 und der Faltenbalg 32 nehmen ihre Ruhelage ein. Die erste Formschale ist nun einzig vom O-Ring 16 der Zentrierstation 3 gehalten. Die vom O-Ring 16 von allen Seiten gleichmässig auf die Formschale einwirkenden radialen Kräfte bewirken, dass die Formschale in den Kraftschwerpunkt geschoben wird. Die Formschale ist nun zentriert.
- Der erste Greifer 1 wird wieder auf die erste Formschale hinbewegt, bis die Formschale wieder auf der Auflage 25 aufliegt und der erneut abgedichtete Hohlraum 29 wird wieder mit Vakuum beaufschlagt.
- Der erste Greifer 1 wird zusammen mit der Formschale aus der Zentrierstation 3 herausgefahren.
- Der dritte Motor 10 dreht den ersten Greifer 1 um die Achse 6, bis die Markierung der ersten Formschale einen vorbestimmten Drehwinkel θ₁ einnimmt.
- Der zweite Greifer 2 wird durch die Zentrierstation 3 hindurchgefahren.
- Der Roboter übergibt die zweite Formschale an den zweiten Greifer 2.
- Die Zentrierung der zweiten Formschale erfolgt nun auf analoge Weise, indem der zweite Greifer 2 die zweite Formschale in die Zentrierstation 3 verschiebt, temporär von der zweiten Formschale gelöst wird, so dass sich die Formschale zentriert, die Formschale wieder ergreift und in Richtung der Vorrichtung 4 zum Zuführen und Auftragen des Tapes 5 bewegt.
- Der vierte Motor 11 dreht den zweiten Greifer 2 um die Achse 6, bis die Markierung der zweiten Formschale einen vorbestimmten Drehwinkel θ₂ einnimmt. Die Drehwinkel der beiden Formschalen sind nun entsprechend dem Linsenrezept relativ zueinander eingestellt.
- Die beiden Greifer 1 und 2 werden entsprechend dem Linsenrezept im Abstand zueinander positioniert. Die beiden Formschalen sind nun zentriert und relativ zueinander ausgerichtet.
- Eine Anpressrolle der Vorrichtung 4 drückt nun das Ende des Tapes 5 an die Ränder der beiden Formschalen. Die Motoren 10 und 11 drehen die beiden Greifer 1 und 2 synchron um die Achse 6, wobei das unter der Anpressrolle durchlaufende Tape 5 auf die Ränder der beiden rotierenden Formschalen aufgetragen und am Schluss abgeschnitten wird. Auf diese Weise werden die beiden Formschalen durch das Tape zu einem Verbund verbunden.
- Der zweite Greifer 2 wird von der Formschale gelöst und weggefahren.

Der Verbund wird nun vom Roboter oder einem Operateur übernommen, der den Verbund zu einer Füllstation transportiert, wo ein Monomer in den durch die beiden Formschalen und das Tape begrenzten Hohlraum eingefüllt wird.

Die beschriebene Vorrichtung ermöglicht die vollautomatische Zentrierung und Ausrichtung der beiden Formschalen und die Formschalen mit einem Tape zu einem Verbund zu verbinden.

Die gleiche Vorrichtung, aber ohne die Vorrichtung 4 (Fig. 1) zum Auftragen des Tapes, kann auch verwendet werden, um die beiden Formschalen gegenseitig auszurichten und dann mit einem anderen Dichtungselement zu einem den Hohlraum fiir die Linse enthaltenden Verbund zu verbinden.

## Patentansprüche

1. Vorrichtung zum Ausrichten einer ersten und einer zweiten Formschale mit einer Zentrierstation (3), **dadurch gekennzeichnet, dass** ein erster Greifer (1) zum Halten der ersten Formschale und ein zweiter Greifer (2) zum Halten der zweiten Formschale relativ zueinander und relativ zur Zentrierstation (3) entlang einer vorbestimmten Achse (6) verschiebbar und sowohl einzeln als auch synchron um die Achse (6) drehbar sind, dass die Zentrierstation (3) mindestens ein Federelement aufweist, wobei das mindestens eine Federelement eine kreisförmige Öffnung (13) umschliesst, und dass die Achse (6) durch das Zentrum der kreisförmigen Öffnung (13) verläuft.

2. Vorrichtung nach Anspruch 1, **dadurch gekennzeichnet, dass** die Zentrierstation (3) einen Körper (12) mit einer Wand (14) aufweist, die die kreisförmige Öffnung (13) bildet und eine Nut (15) aufweist, und dass das mindestens eine Federelement ein geschlossener oder aufgeschnittener O-Ring (16) oder ein Schlauch (19) aus elastisch deformierbarem Material ist, der in die Nut (15) eingelegt ist.

3. Vorrichtung nach Anspruch 1, **gekennzeichnet durch** eine Vielzahl von Federelementen, die **durch** an einem Ring (23) angeordnete Laschen (24) gebildet sind.

4. Vorrichtung nach einem der Ansprüche 1 bis 3, **dadurch gekennzeichnet, dass** der erste Greifer (1) und der zweite Greifer (2) auf einer gemeinsamen Führungsschiene (7) gelagert sind.

5. Vorrichtung nach einem der Ansprüche 1 bis 4, **gekennzeichnet durch**
einen ersten Motor (8) für die Verschiebung des ersten Greifers (1) entlang der Achse (6),
einen zweiten Motor (9) für die Verschiebung des zweiten Greifers (2) entlang der Achse (6),
einen dritten Motor (10) für die Drehung des ersten Greifers (1) um die Achse (6), und
einen vierten Motor (11) für die Drehung des zweiten Greifers (2) um die Achse (6).

6. Vorrichtung nach einem der Ansprüche 1 bis 5, **dadurch gekennzeichnet, dass** eine Vorrichtung (4) zum Auftragen eines Tapes (5) vorhanden ist, um die beiden Formschalen zu einem Verbund zu verbinden.

7. Vorrichtung nach einem der Ansprüche 1 bis 6, **dadurch gekennzeichnet, dass** der erste Greifer (1) und der zweite Greifer (2) eine Auflage (25), ein innerhalb der Auflage (25) angeordnetes Dichtungselement (28) für die Abdichtung eines zwischen dem Greifer (1 bzw. 2) und der Formschale (27) gebildeten Hohlraums und ein wegaufnehmendes Element aufweisen, das eine Auslenkung des Dichtungselementes (28) entlang der Achse (6) ermöglicht.

## Claims

1. Device for aligning a first and a second shell mold with a centering station (3), **characterised in that** a first gripper (1) for holding the first shell mold and a second gripper (2) for holding the second shell mold are movable relative to each other and relative to a centering station (3) along a predetermined axis (6) and are rotatable individually as well as synchronously on the axis (6), that the centering station (3) has at least one spring element, whereby the at least one spring element embraces a circular opening (13), and that the axis (6) runs through the centre of the circular opening (13).

2. Device according to claim 1, **characterised in that** the centering station (3) has a body (12) with a wall (14) that forms the circular opening (13) and has a groove (15), and that the at least one spring element is a closed or cut O-ring (16) or a tube (19) made of elastically deformable material that is inserted in the groove (15).

3. Device according to claim 1, **characterised by** a plurality of spring elements that are formed by means of tongues (24) arranged on a ring (23).

4. Device according to any of claims 1 to 3, **characterised in that** the first gripper (1) and the second gripper (2) bear on a common guide rail (7).

5. Device according to any of claims 1 to 4, **characterised by** a first motor (8) for moving the first gripper (1) along the axis (6), a second motor (9) for moving the second gripper (2) along the axis (6), a third motor (10) for rotating the first gripper (1) on the axis (6), and a fourth motor (11) for rotating the second gripper (2) on the axis (6).

6. Device according to any of claims 1 to 5, **characterised in that** a device (4) for applying a tape (5) is present in order to join the two shell molds into a composite.

7. Device according to any of claims 1 to 6, **characterised in that** the first gripper (1) and the second gripper (2) have a support (25), a sealing element (28) arranged within the support (25) to seal a cavity formed between the gripper (1 or 2) and the shell mold (27) and a path absorbing element that enables deflection of the sealing element (28) along the axis (6).

## Revendications

1. Dispositif pour aligner une première et une deuxième coque de moulage avec une station de centrage (3), **caractérisé en ce qu'** une première griffe (1) pour maintenir la première coque de moulage et une deuxième griffe (2) pour maintenir la deuxième coque de moulage sont déplaçable le long d'un axe (6) prédéterminé de façon relative l'une par rapport à l'autre et de façon relative par rapport à la station de centrage (3) et peuvent être tourné de façon individuelle ainsi que synchrone autour de l'axe (6), **en ce que** la station de centrage (3) comporte au moins un élément élastique, le moins un élément élastique entourant une ouverture (13) circulaire, et **en ce que** l'axe (6) s'étend à travers le centre de l'ouverture (13) circulaire.

2. Dispositif selon la revendication 1, **caractérisé en ce que** la station de centrage (3) comporte un corps (12) avec une paroi (14) qui forme l'ouverture (13) circulaire et présente une rainure (15), et **en ce que** le au moins un élément élastique est un joint torique (16) fermé ou fendu ou un tuyau flexible (19) en matière élastique déformable qui est introduit dans la rainure (15).

3. Dispositif selon la revendication 1, **caractérisé par** une multitude d'éléments élastiques qui sont formés par des pattes (24) disposées sur un anneau (23).

4. Dispositif selon une des revendications 1 à 3, **caractérisé en ce que** la première griffe (1) et la deuxième griffe (2) sont logées sur un rail (7) de guidage commun.

5. Dispositif selon une des revendications 1 à 4, **caractérisé par** un premier moteur (8) pour déplacer la première griffe (1) le long de l'axe (6), un deuxième moteur (9) pour déplacer la deuxième griffe (2) le long de l'axe (6), un troisième moteur (10) pour tourner la première griffe (1) autour de l'axe (6), et un quatrième moteur (11) pour tourner la deuxième griffe (1) autour de l'axe (6).

6. Dispositif selon une des revendications 1 à 5, **caractérisé en ce qu'**il y a un dispositif (4) pour appliquer une bande (5) pour lier les deux coques de moulage en une composite.

7. Dispositif selon une des revendications 1 à 6, **caractérisé en ce que** la première griffe (1) et la deuxième griffe (2) comportent un support (25), un élément d'étanchéité (28) disposé à l'intérieur du support (25), pour rendre étanche une cavité formée entre la griffe (1 ou 2) et la coque de moulage (27) et un élément racourcissant le trajet, lequel élément permet le déplacement de l'élément d'étanchéité (28) le long de l'axe (6).
